# DEMANDE DE BREVET EUROPEEN

(11) **EP 4 697 126 A1**
(43) Date de publication de la demande: **18.02.2026**
(21) Numéro de dépôt: 24306366.6
(22) Date de dépôt: 15.08.2024
(51) Int. Cl.: G05G 1/04, A63F 13/24, G05G 5/04, A63F 13/21

(54) **DISPOSITIF D'ENTREE DE COMMANDE COMPORTANT AU MOINS UNE GÂCHETTE DE COMMANDE AVEC CAPTEUR DE FIN DE COURSE**

(71) Demandeur: NACON, 59273 Fretin (FR)
(72) Inventeur: FALC, Alain, 8500 Courtrai (BE); ALLAERT, Yannick, 59940 Estaires (FR); DEPREY, François, 59133 Phalempin (FR); ANDRE, Romain, 59000 Lille (FR)
(74) Mandataire: Matkowska, Franck

(57) **Abrégé**

Le dispositif d'entrée de commande, notamment contrôleur de jeu ou manette de jeu (1), comporte au moins une gâchette de commande (6), qui de préférence est rotative, et au moins une butée de blocage (70) adaptée pour pouvoir être positionnée dans au moins une position de blocage dans laquelle elle bloque la gâchette de commande (6) amenée en butée contre la butée de blocage (70), de manière à réduire la course de la gâchette de commande (6). La gâchette de commande (6) comprend un capteur de fin de course (65), qui est adapté pour détecter la position de la gâchette de commande (6) en butée contre la butée de blocage (70) positionnée dans ladite position de blocage.

## Description

### Domaine technique

La présente invention concerne les dispositifs d'entrée de commande, notamment de type contrôleurs de jeu, et plus particulièrement les manettes de jeu, comportant au moins une gâchette de commande mobile et actionnable par un utilisateur, de préférence par pression au moyen d'un doigt.

### Art antérieur

On désigne d'une manière générale dans le présent texte par « dispositif d'entrée de commande », tout dispositif permettant à un utilisateur au moins d'entrer manuellement des commandes dans un système électronique et/ou informatique.

La communication entre le « *dispositif d'entrée de commande* » et le système électronique et/ou informatique peut indifféremment être de type filaire ou de type sans fil.

Les contrôleurs de jeu, et plus particulièrement les manettes de jeu, sont des dispositifs d'entrée de commande particuliers, qui de manière non exhaustive, sont par exemple utilisés pour permettre à un utilisateur d'interagir avec un jeu vidéo, en particulier pour commander un personnage virtuel dans un jeu ou pour interagir avec un environnement virtuel.

Les dispositifs d'entrée de commande peuvent par exemple également être utilisés pour permettre à un utilisateur de sélectionner du contenu audio et/ou vidéo ou pour commander différents types d'appareils électroniques, tels qu'un téléviseur, ordinateur,...

Plus particulièrement, certains dispositifs d'entrée de commande comportent une ou plusieurs gâchettes de commande mobiles, le plus souvent rotatives, qui sont actionnables par un utilisateur pour entrer une commande et qui généralement peuvent être plus ou moins enfoncées par une pression exercée par un utilisateur. Lorsque le dispositif d'entrée de commande présente une ergonomie adaptée pour être tenu à une main ou à deux mains par un utilisateur, ces gâchettes de commande sont de préférence digitales, c'est-à-dire actionnables par pression au moyen d'un doigt, le plus souvent l'index de l'utilisateur. Plus particulièrement lorsque le dispositif d'entrée de commande est une manette de jeu qui présente une ergonomie adaptée pour être tenue à deux mains par un utilisateur, il comporte, le plus souvent, deux gâchettes de commande gauche et droite.

La demande de brevet internationale WO 2022/148976 divulgue une manette de jeu dans laquelle chaque gâchette de commande rotative est équipée d'un mécanisme de réglage de la course de ladite gâchette de commande comportant une came rotative, qui est montée dans la gâchette de commande. Cette came rotative est actionnable en rotation par un utilisateur de la manette de jeu, au moyen d'un levier accessible sous la gâchette de commande, entre plusieurs positions de réglage de la course en rotation de la gâchette de commande, dont une première position dans laquelle la course en rotation de la gâchette de commande est réduite et une deuxième position dans laquelle la course en rotation de la gâchette de commande est maximale.

Dans cette demande de brevet internationale WO 2022/148976, la manette de jeu est en outre équipée de deux capteurs différents qui permettent de détecter la gâchette de commande.

Un des deux capteurs peut être un capteur sans contact, de type capteur magnétique à effet Hall, par ailleurs couramment utilisé dans les manettes de jeu. Ce capteur sans contact permet de détecter la position en rotation de la gâchette de commande et délivre un signal de détection analogique, qui code ladite position en rotation (ou angle de rotation) de la gâchette de commande. Ce signal de détection analogique est traité par une unité de commande électronique montée sur un circuit imprimé type « PCB », logé à l'intérieur de la coque de la manette de jeu.

Plus particulièrement, ce capteur à effet hall, est logé à l'intérieur de la coque de la manette de jeu et est soudé sur ledit circuit imprimé type « PCB ». Ce capteur à effet Hall permet de détecter un aimant qui est fixé à la gâchette de commande.

L'autre capteur peut être est un capteur de contact qui est logé à l'intérieur de la coque de la manette de jeu et est soudé sur ledit circuit imprimé type « PCB ». Ce capteur de contact est positionné à l'intérieur de la coque de la manette de jeu par rapport à la gâchette de commande, de telle sorte qu'il est activé par contact avec la came rotative de la gâchette de commande uniquement lorsque cette la came rotative est dans la première position susvisée (course en rotation de la gâchette de commande réduite). Ce capteur de contact permet de générer un signal de détection, qui est traité par ladite unité de commande électronique.

Plus particulièrement, lorsque la came rotative est dans la première position susvisée (course en rotation de la gâchette de commande réduite), l'unité de commande électronique de la manette de jeu prend en compte uniquement le signal de détection du capteur de contact et délivre en sortie, à destination de la console de jeu ou équivalent, un signal de commande obtenu à partir de ce signal de détection. Ce mode de fonctionnement de la manette de jeu, plus couramment désigné « *Hair trigger* », permet avantageusement à un utilisateur d'entrer des commandes avec une plus grande réactivité.

Lorsque la came rotative est dans la deuxième position susvisée (course en rotation de la gâchette de commande maximale), l'unité de commande prend en compte uniquement le signal de détection analogique du capteur sans contact et délivre en sortie à destination de la console de jeu ou équivalent un signal de commande qui code la position instantanée de la gâchette de commande.

La solution décrite dans cette demande de brevet internationale WO 2022/148976 complexifie la structure de la gâchette de commande. En outre, le deuxième capteur de contact est difficilement accessible et difficilement remplaçable en cas de dysfonctionnement, pour pouvoir le remplacer par un nouveau capteur de contact.

On a par ailleurs proposé dans la demande de brevet internationale WO 2023/214929 une manette de jeu qui, à l'instar de la manette jeu décrite dans la demande de brevet internationale WO 2022/148976, comporte un capteur sans contact, de type capteur magnétique à effet Hall, et un capteur de contact de type interrupteur mécanique pour une commande de type tout ou rien dans un mode fonctionnement de type « *Hair trigger* » (course en rotation réduite de la gâchette de commande).

Dans cette solution technique, la manette de commande comporte un élément d'interception, qui peut être déplacé par un utilisateur de la manette entre une position d'interception, dans laquelle l'élément d'interception est situé dans le trajet de la gâchette de commande et réduit la course de la gâchette de commande, et une position escamotée dans laquelle l'élément d'interception est situé en dehors du trajet de la gâchette de commande, de sorte que la course la gâchette est complète et maximale.

Lorsque l'élément d'interception est situé dans le trajet de la gâchette de commande, la gâchette de commande peut être actionnée jusqu'à ce qu'elle vienne en contact avec l'élément d'interception et le repousse, notamment en le déformant de manière à mettre l'élément d'interception en contact avec le capteur de contact positionné sous l'élément d'interception (mode de fonctionnement de type « *Hair trigger* »).

Dans cette solution technique, la structure de la gâchette de commande est plus simple. En revanche, cette solution semble moins robuste mécaniquement et en mode de fonctionnement de type « *Hair trigger* », la réactivité de la manette pour l'activation du capteur de contact est plus faible, du fait de l'activation du capteur de contact par un élément d'interception qui doit être déplacé par la gâchette de commande. En outre, à l'instar de la demande de brevet internationale WO 2022/148976, ledit capteur de contact est difficilement accessible et difficilement remplaçable en cas de dysfonctionnement.

### Objectif de l'invention

L'invention propose une nouvelle solution technique de détection d'une gâchette de commande dont la course est réglable dans un dispositif d'entrée de commande, notamment un contrôleur de jeu ou une manette de jeu.

### Résumé de l'invention

L'invention a ainsi pour objet un dispositif d'entrée de commande, notamment un contrôleur de jeu ou une manette de jeu, comportant les caractéristiques techniques suivantes. Le dispositif d'entrée de commande comporte au moins une gâchette de commande mobile et actionnable par un utilisateur, et un mécanisme de réglage de la course de ladite gâchette de commande ; le mécanisme de réglage comporte une butée de blocage adaptée pour pouvoir être positionnée dans au moins une position de blocage dans laquelle elle bloque la gâchette de commande amenée en butée contre la butée de blocage, de manière à réduire la course de la gâchette de commande ; la gâchette de commande comprend un capteur de fin de course, qui est adapté pour détecter la position de la gâchette de commande en butée contre la butée de blocage positionnée dans ladite position de blocage.

Différentes technologies peuvent être utilisée pour le capteur de fin de course.

De préférence, le capteur de fin de course est un capteur de contact, c'est-à-dire un capteur adapté d'une manière générale pour détecter un contact entre le capteur et la butée de blocage.

Plus préférentiellement encore, le capteur de fin de course peut être choisi parmi la liste suivante : capteur de contact mécanique, capteur de contact optomécanique, capteur de contact comprenant un interrupteur mécanique ou un commutateur mécanique, capteur de contact piézoélectrique.

Le capteur de fin de course peut également être un capteur de proximité, et notamment un capteur de proximité capacitif, magnétique, inductif ou optique.

Quelle que soit la technologie utilisée, le capteur de fin de course est de préférence un capteur tout ou rien.

Plus particulièrement, le dispositif d'entrée de commande de l'invention peut comporter les caractéristiques additionnelles et optionnelles suivantes, chaque caractéristique additionnelle et optionnelle pouvant être combinée avec l'une quelconque des autres caractéristiques techniques du dispositif :
- la gâchette de commande est de préférence rotative.
- La gâchette de commande comporte un corps de gâchette creux dans lequel le capteur de fin de course est positionné, de préférence entièrement.
- La gâchette de commande comporte un couvercle de fermeture qui ferme le corps de gâchette, qui est amovible de manière à pourvoir être retiré et qui comporte une ouverture traversante permettant au capteur de fin de course de détecter la position de la gâchette de commande en butée contre la butée de blocage positionnée dans ladite position de blocage, et de préférence permettant un contact entre le capteur de fin de course et la butée de blocage.
- Le capteur de fin de course est positionné entièrement à l'intérieur du corps de gâchette et la butée de blocage passe à travers l'ouverture traversante du couvercle de fermeture de la gâchette de commande lorsque la butée de blocage est en position de blocage et que la gâchette de commande est mise en butée contre la butée de blocage.
- La butée de blocage est adaptée pour pouvoir être positionnée dans une position escamotée dans laquelle la butée de blocage ne fait pas obstacle à la gâchette de commande et la course de la gâchette de commande est supérieure à celle obtenue avec ladite position de blocage.
- Le capteur de fin de course n'est pas activable ou fonctionnel lorsque la butée de blocage est dans ladite position escamotée.
- Le capteur de fin de course est un capteur tout ou rien.
- Le capteur de fin de course est positionné de manière à détecter un contact entre le capteur de fin de course et la butée de blocage, lorsque la gâchette de commande est en butée contre la butée de blocage positionnée dans ladite position de blocage,
- Le capteur de fin de course est configuré pour générer un signal électrique de détection à deux états, un des états correspondant à une détection par le capteur de fin de course de la position de la gâchette de commande en butée contre la butée de blocage positionnée dans ladite position de blocage et l'autre état correspondant à une absence de contact entre la gâchette de commande et la butée de blocage.
- Le capteur de fin de course est positionné de manière à détecter un contact entre le capteur de fin de course et la butée de blocage, lorsque la gâchette de commande est en butée contre la butée de blocage positionnée dans ladite position de blocage.
- Dans une variante de réalisation, la butée de blocage est mobile et guidée en translation entre sa position de blocage et sa position escamotée.
- La gâchette de commande est rotative et l'axe de translation (A₇₀⁾ de la butée de blocage est transversal, et plus préférentiellement perpendiculaire, à l'axe de rotation 6a de la gâchette de commande 6.
- Dans une autre variante de réalisation, la butée de blocage est mobile en rotation entre sa position de blocage et sa position escamotée.
- De préférence, la gâchette de commande est rotative et l'axe de rotation de la butée de blocage est transversal et de préférence perpendiculaire, à l'axe de rotation de la gâchette de commande.
- La gâchette de commande est adaptée pour être bloquée en fin de course par la coque de la manette lorsque la butée de blocage est en position escamotée.
- Dans une variante particulière de réalisation, la butée de blocage est positionnable uniquement dans deux positions fonctionnelles constituées par ladite position de blocage et ladite position escamotée.
- La butée de blocage est verrouillable en position au moins dans ladite position de blocage et de préférence également dans ladite position escamotée.
- le capteur de fin de course est configuré pour générer un signal électrique de détection à deux états, un des états correspondant à une détection par le capteur de fin de course de la position de la gâchette de commande en butée contre la butée de blocage positionnée dans ladite position de blocage et l'autre état correspondant à une absence de contact entre la gâchette de commande et la butée de blocage.
- Le dispositif comporte un capteur de position sans contact, qui est adapté pour détecter la position de la gâchette de commande, et plus particulièrement pour mesurer l'angle de rotation de la gâchette de commande lorsque celle-ci est rotative.
- La gâchette de commande comprend un élément détectable à distance par le capteur de position sans contact.
- L'élément détectable est un aimant.
- Le capteur de position sans contact est un capteur magnétique, de préférence un capteur à effet Hall.
- Le dispositif comprend une unité de commande électronique, qui est configurée pour sélectionner un premier signal électrique de détection généré au moyen du capteur de fin de course lorsque la butée de blocage est dans sa position de blocage, et pour sélectionner un deuxième signal électrique de détection généré au moyen du capteur de position sans contact lorsque la butée de blocage n'est pas dans sa position de blocage, et de préférence est dans une position escamotée dans laquelle la butée de blocage ne fait pas obstacle à la gâchette de commande, et dans lequel l'unité de commande électronique est configurée pour générer, un signal de commande obtenu à partir du signal électrique de détection qui est sélectionné.
- Le dispositif comporte un troisième capteur, qui est positionné par rapport au mécanisme de réglage de la course de gâchette de commande, de manière à être activé par ledit mécanisme de réglage lorsque la butée de blocage est dans sa position de blocage et/ou lorsque la butée de blocage est dans sa position escamotée.
- Le troisième capteur est configuré pour générer un signal électrique de détection de position à au moins deux états, un des états correspondant à une détection de la position escamotée de la butée de blocage et l'autre état correspondant à une détection de la position de blocage de la butée de blocage.
- L'unité de commande électronique est configurée pour sélectionner le signal électrique de détection parmi le premier signal électrique de détection et le deuxième signal électrique de détection, en fonction d'un signal électrique de détection généré par le troisième capteur.
- Le troisième capteur peut être un capteur de contact et plus particulièrement un capteur de contact mécanique.
- Le troisième capteur peut comporter interrupteur mécanique ou un commutateur.
- le mécanisme de réglage de la course de gâchette de commande est actionnable manuellement.
- Le dispositif comporte une coque et le mécanisme de réglage de la course de gâchette de commande comprend un élément d'actionnement, dont une partie au moins est positionnée à l'extérieur de la coque, et qui est lié mécaniquement à la butée de blocage et permet à un utilisateur de déplacer la butée de blocage entre ladite la position de blocage et une position de escamotée dans laquelle la butée de blocage ne fait pas obstacle à la gâchette de commande et la course de la gâchette de commande est supérieure à celle obtenue avec ladite position de blocage.
- Le dispositif comporte un mécanisme de verrouillage/déverrouillage qui est adapté pour verrouiller manuellement la butée de blocage au moins dans sa position de blocage et de préférence dans sa position escamotée et qui est adapté pour déverrouiller manuellement la butée de blocage au moins lorsqu'elle est dans sa position de blocage et de préférence également lorsqu'elle est dans sa position escamotée.
- Le dispositif comporte une coque ; le mécanisme de verrouillage/déverrouillage comprend ledit élément d'actionnement; et ledit élément d'actionnement est mobile entre au moins une configuration déverrouillée dans laquelle l'élément d'actionnement est apte à être déplacé manuellement en entraînant la butée de blocage entre sa position de blocage et sa position escamotée, et au moins une configuration verrouillée dans laquelle l'élément d'actionnement coopère avec la coque de manière à bloquer la butée de blocage au moins dans sa position de blocage et de préférence également dans sa position escamotée.
- Le mécanisme de verrouillage/déverrouillage comprend ledit élément d'actionnement; et ledit élément d'actionnement est mobile entre au moins une configuration déverrouillée dans laquelle l'élément d'actionnement est apte à être déplacé manuellement en entraînant la butée de blocage dans sa position de blocage et dans sa position escamotée, et au moins une configuration verrouillée dans laquelle l'élément d'actionnement coopère avec la coque de manière à bloquer la butée de blocage au moins dans sa position de blocage et de préférence également dans sa position escamotée.
- L'élément d'actionnement est mobile par rapport à la butée de blocage entre ladite configuration verrouillée et ladite configuration déverrouillée.
- L'élément d'actionnement est associé à un élément de rappel élastique et est adapté pour être amené et maintenu en configuration déverrouillée par une pression manuelle permettant d'enfoncer l'élément d'actionnement dans la coque et de contraindre l'élément de rappel élastique ; l'élément de rappel élastique permet en l'absence de pression manuelle sur l'élément d'actionnement de rappeler élastiquement ledit élément d'actionnement dans sa configuration verrouillée.
- L'élément d'actionnement est mobile par rapport à la butée de blocage entre ladite configuration verrouillée et ladite configuration déverrouillée et l'élément de rappel élastique est positionné entre la butée de blocage et l'élément d'actionnement.
- La butée de blocage comporte un logement dans lequel est positionné l'élément de rappel élastique et une partie de l'élément d'actionnement.
- L'élément de rappel élastique comprend un ressort, de préférence un ressort hélicoïdal ou comprend une butée déformable élastiquement.
- Le dispositif comporte une coque ; la butée de blocage est mobile et guidée en translation entre sa position de blocage et sa position escamotée et dans la configuration verrouillée, l'élément d'actionnement coopère avec la coque pour bloquer en translation la butée de blocage par rapport à la coque au moins dans ladite position de blocage.
- La butée de blocage est mobile et guidée en translation entre sa position de blocage et sa position escamotée, et l'élément d'actionnement est mobile en translation entre ladite configuration verrouillée et ladite configuration transversalement, et de préférence perpendiculairement, à l'axe de translation de la butée de blocage.
- Le dispositif comporte une coque ; la butée de blocage est rotative autour d'un axe de rotation entre sa position de blocage et sa position escamotée et dans la configuration verrouillée, l'élément d'actionnement coopère avec la coque pour bloquer en rotation la butée de blocage par rapport à la coque au moins dans ladite première position de réglage.
- L'élément d'actionnement comporte des éléments de verrouillage de type mâle ou femelle adaptés pour coopérer avec des éléments de verrouillage complémentaires de la coque, afin de bloquer la butée de blocage par rapport à la coque lorsque l'élément d'actionnement est amené en configuration verrouillée.
- Les éléments de verrouillage de l'élément d'actionnement et les éléments de verrouillage complémentaires de la coque sont prévus pour bloquer l'élément d'actionnement par rapport à la coque de manière indexée, dans chacune des positions de réglage de la butée de blocage, lorsque l'élément d'actionnement est amené en configuration verrouillée.
- Le dispositif constitue une manette de jeu qui est adaptée pour être tenue à une main ou deux mains par un utilisateur, et de préférence dans laquelle la ou les gâchettes de commande (6) sont digitales.

L'invention a également pour objet une gâchette de commande d'un dispositif d'entrée de commande, notamment d'un contrôleur de jeu ou d'une manette de jeu, laquelle gâchette de commande comporte un capteur de fin de course.

Plus particulièrement, la gâchette de commande de l'invention peut comporter les caractéristiques additionnelles et optionnelles suivantes, chaque caractéristique additionnelle et optionnelle pouvant être combinée avec l'une quelconque des autres caractéristiques techniques du dispositif :
- La gâchette de commande comporte un corps de gâchette creux dans le capteur de fin de course est positionné, de préférence entièrement.
- la gâchette de commande comporte un couvercle de fermeture qui ferme le corps de gâchette, qui est amovible de manière à pourvoir être retiré et qui comporte une ouverture traversante, et le capteur de fin de course étant positionné entièrement à l''intérieur du corps de gâchette et en vis-à-vis de cette ouverture traversante.
- Le capteur de fin de course est un capteur tout ou rien
- préférence, le capteur de fin de course est un capteur de contact.
- le capteur de fin de course est choisi parmi la liste suivante : capteur de contact mécanique, capteur de contact optomécanique, capteur de contact comprenant un interrupteur mécanique ou un commutateur mécanique, capteur de contact piézoélectrique.
- la gâchette de commande peut comporter un élément qui est détectable à distance, et qui de préférence est un aimant.
- La gâchette de commande comporte un axe de rotation.

### Brève description des dessins

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- La figure 1 est une vue de dessus d'une variante particulière de réalisation d'une manette de jeu.
- La figure 2 est une vue de dessous de la manette de jeu de la figure 1.
- La figure 3 est une vue partielle montrant l'intérieur de la manette de la figure 1 lorsque la demi-coque inférieure de la manette a été retirée, la gâchette de commande étant en position de repos initiale, aucune pression manuelle n'étant exercée par un utilisateur sur la gâchette de commande.
- La figure 4 est une autre vue partielle, sous un autre angle que la figure 3, montrant l'intérieur de la manette de la figure 1.
- La figure 5 est la même vue partielle de l'intérieur de la manette que la figure 3, mais en ayant retiré la plaque de fermeture de la gâchette de commande de manière à visualiser l'intérieur de la gâchette de commande et en ayant retiré l'aimant de la gâchette de commande détectable par un capteur de position à effet Hall.
- La figure 6 est une vue partielle de l'intérieur de la manette, mais en ayant retiré la plaque de fermeture de la gâchette de commande de manière à visualiser l'intérieur de la gâchette de commande et en ayant retiré l'aimant de la gâchette de commande détectable par un capteur de position à effet Hall et le mécanisme de réglage de la course de la gâchette de commande, de manière à visualiser les connexions filaires entre le capteur de fin de course de la gâchette de commande et le circuit imprimé de la manette.
- La figure 7 est une vue partielle de la manette montrant la butée fixe de la coque de la manette qui permet de bloquer en rotation la gâchette de commande, lorsque la butée de blocage de la manette est en position escamotée et que la gâchette de commande est enfoncée dans la coque de la manette au maximum de sa course en rotation.
- La figure 8 est une vue éclatée montrant le capteur de fin de course de la manette, un mécanisme de réglage de la course de la manette (butée de blocage ; élément d'actionnement et de verrouillage/déverrouillage de la butée de blocage ; ressort de rappel), un capteur de position apte à détecter la position de blocage et la position escamotée de butée de blocage et une pièce d'actionnement rotative qui est adaptable sur un bras de la butée de blocage de manière à être entraînée en rotation par le bras de la butée de blocage et à commuter ledit capteur de position.
- La figure 9 est une vue montrant l'assemblage du mécanisme de réglage de la course de la manette (butée de blocage ; élément d'actionnement et de verrouillage/déverrouillage de la butée de blocage ; ressort de rappel) et de la pièce d'actionnement de la figure 8, et montrant le positionnement du capteur de fin de course par rapport à la butée de blocage, et le positionnement du capteur de position par rapport à ladite la pièce d'actionnement rotative.
- La figure 10 est une vue partielle montrant une gâchette de commande de la manette de la figure 1 dans sa position initiale au repos, le bouton d'actionnement du mécanisme de réglage de la course de la gâchette de commande étant verrouillé dans une position de réglage autorisant une course en rotation réduite de la gâchette de commande (c.-à-d. butée de blocage en position de blocage de la gâchette de commande).
- La figure 11 est une vue partielle montrant une gâchette de commande de la manette de la figure 1 dans sa position initiale au repos, le bouton d'actionnement du mécanisme de réglage de la course de la gâchette de commande étant verrouillé dans une position de réglage autorisant une course en rotation maximale de la gâchette de commande (c.-à-d. butée de blocage en position escamotée).
- La figure 12 est une vue en coupe transversale montrant la butée de blocage dans sa position de blocage et la gâchette de commande en butée contre la butée de blocage.
- La figure 13 est une vue en coupe transversale montrant la butée de blocage dans sa position escamotée.
- La figure 14 est une vue partielle de dessus de l'intérieur de la manette, la butée de blocage étant en position de blocage de la gâchette de commande.
- La figure 15 est une vue partielle de dessus de l'intérieur de la manette, la butée de blocage étant en position escamotée.

### Description détaillée

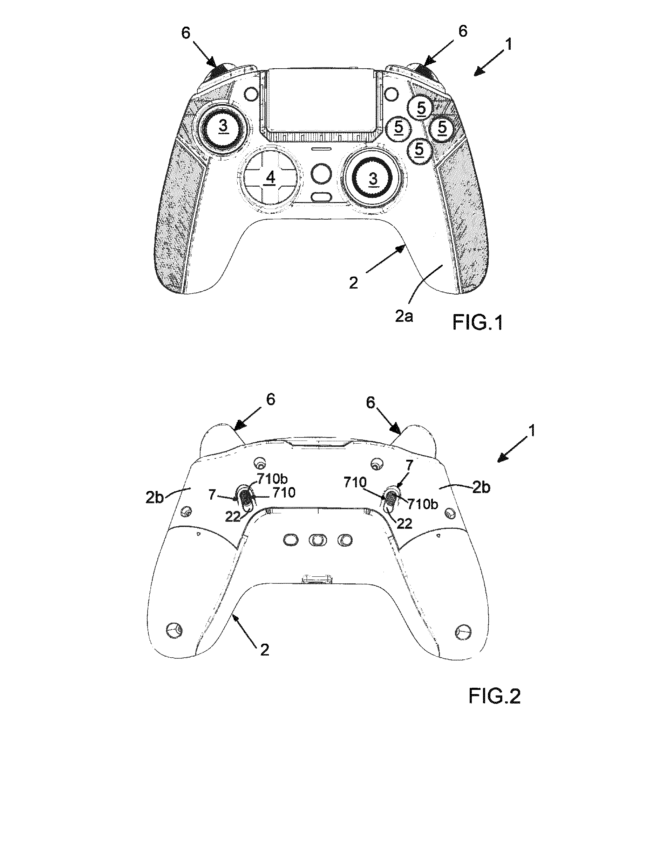

On a représenté sur la figure 1, un exemple particulier de manette de jeu 1 comportant une coque 2 assemblée, encore communément appelée « casing » et formant le corps de la manette.

Dans cet exemple particulier, cette coque 2 présente plus particulièrement une forme ergonomique adaptée pour faciliter sa prise à deux mains par un utilisateur.

Dans une autre variante, la manette pourrait être adaptée pour être tenue à une main ou pour être manipulée par un utilisateur en étant posée sur un support tel que par exemple une table.

Cette coque 2 comprend par exemple une demi-coque supérieure 2a (également communément désignée « *front casing* »), qui est assemblée par tout moyen, par exemple au moyen de vis ou équivalent et/ou par collage et/ou par soudure, avec une demi-coque inférieure 2b (également communément désignée « *back casing* »).

Dans la variante particulière illustrée sur la figure 2, la demi-coque 2b est constituée de deux pièces distinctes. Elle peut également être constituée d'une seule pièce.

De manière usuelle, cette manette 1 comporte sur sa face de dessus (Fig.1) plusieurs éléments de commande actionnables manuellement par un utilisateur, dont notamment deux joysticks 3 pivotants, de type « *thumbstick* », un pavé directionnel 4 et des boutons de commande 5.

Cette manette 1 comporte également (Fig.2) deux gâchettes de commande digitale 6 (communément appelées « trigger »), qui sont positionnées respectivement sur un côté avant de la manette, de préférence de manière symétrique, dans la partie gauche et dans la partie droite de la manette 1.

Dans une autre variante, la manette pourrait comporter une seule gâchette de commande ou plus de deux gâchettes de commande.

Chaque gâchette de commande 6 est mobile par rapport à la coque 2 et est de préférence rotative par rapport à la coque 2.

De manière usuelle, chaque gâchette de commande 6 est en outre rappelée élastiquement en position de repos au moyen d'au moins un ressort de rappel.

Ces deux gâchettes de commande 6 sont actionnables individuellement par un utilisateur, en étant plus ou moins enfoncées dans la coque 2 par une pression exercée par un utilisateur, au moyen d'un doigt de chaque main, généralement son index, lorsque l'utilisateur tient la manette de jeu 1 à deux mains.

Chaque gâchette de commande 6 est associée à un mécanisme de réglage 7 de la course de la gâchette de commande.

Ce mécanisme de réglage 7 comporte une butée de blocage 70 qui est montée à l'intérieur de la coque 2 de la manette.

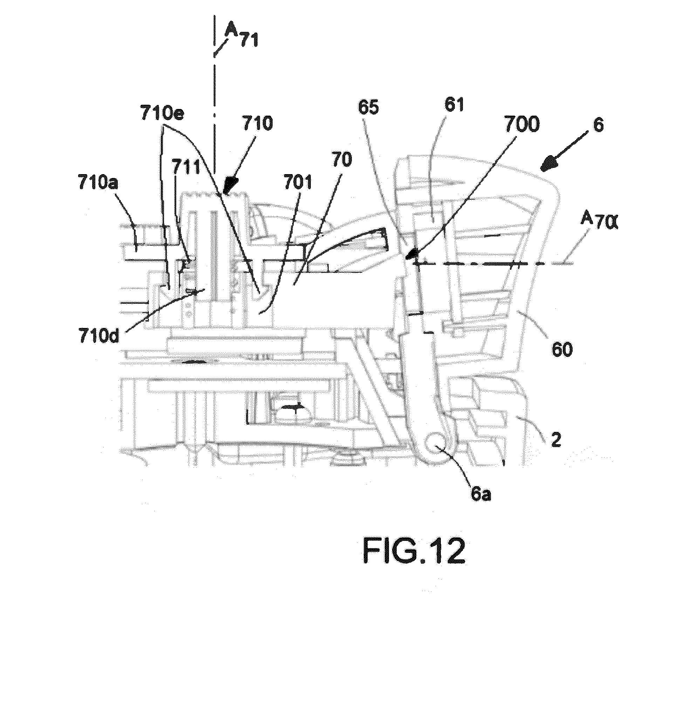

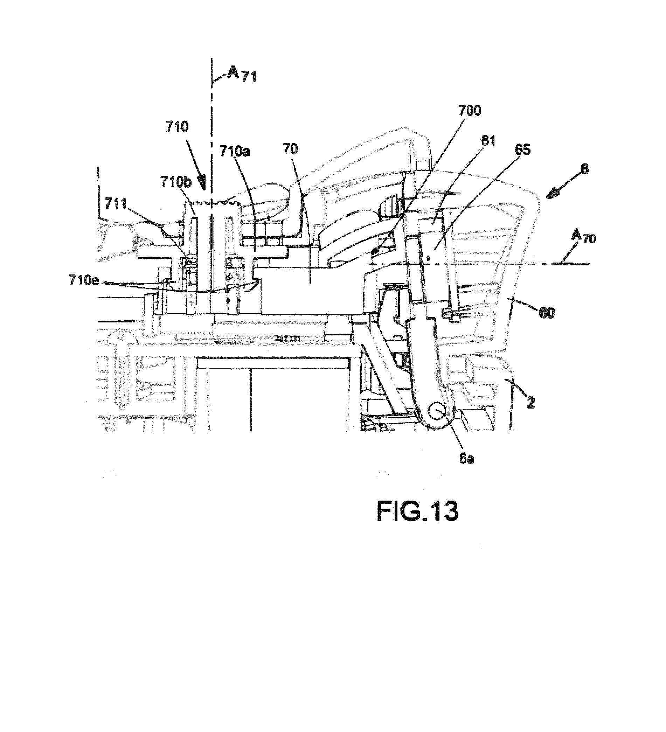

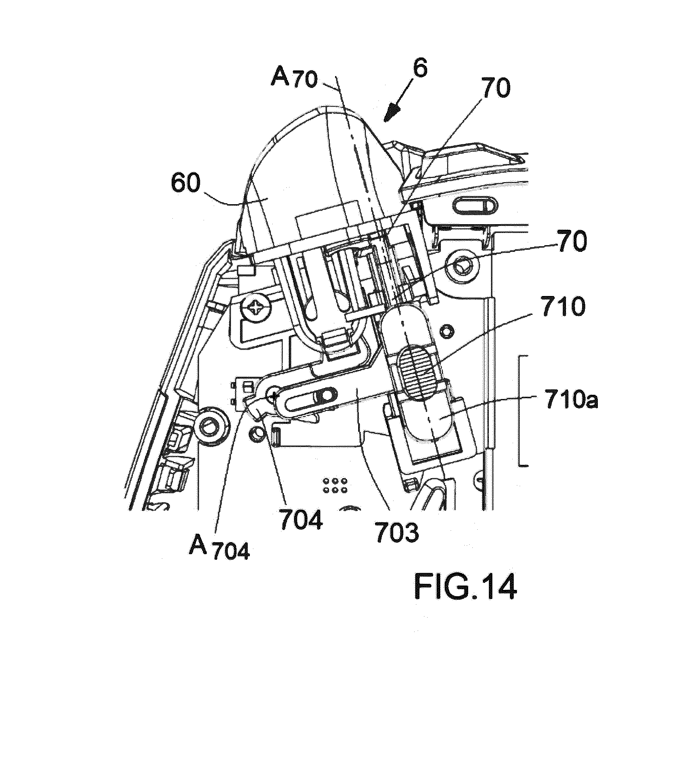

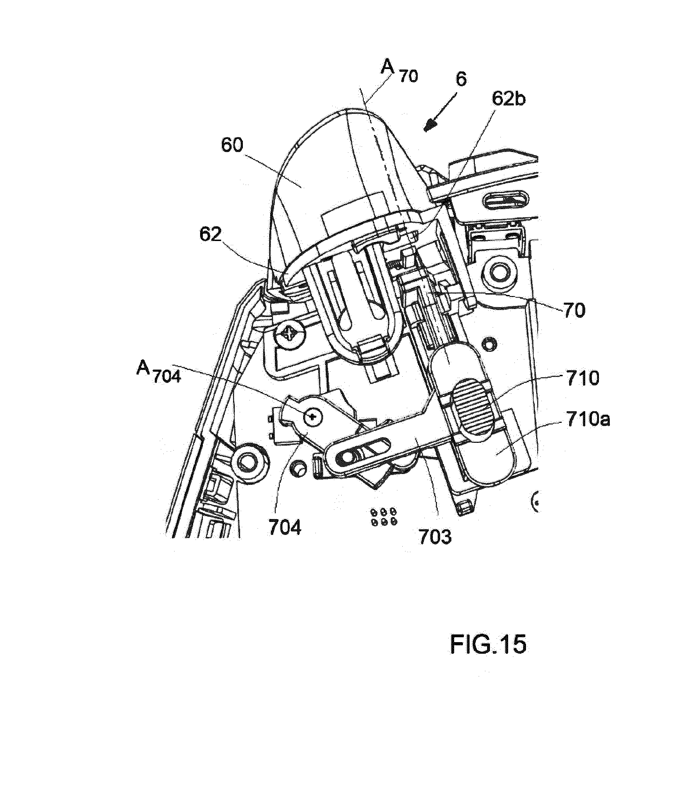

Cette butée de blocage 70 qui peut être déplacée manuellement en translation dans un sens ou dans l'autre dans la direction de l'axe A70 (Figs.12, 13, 14 et 15), par un utilisateur de la manette au moyen d'un élément d'actionnement 710, de préférence facilement accessible sous la manette, entre :
- une position de blocage (illustrée notamment sur les figures 12 et 14) dans laquelle la butée de blocage 70 permet de bloquer la gâchette de commande 6 dans une position intermédiaire, dite position en butée, qui correspond à une course réduite de la gâchette de commande 6,
- et une position escamotée (illustrée notamment sur les figures 13 et 15), dans laquelle la butée de blocage 70 est suffisamment éloignée de la gâchette de commande 6 de manière à être en dehors du trajet de la gâchette de commande 6 et à ne peut pas faire obstacle au mouvement de la gâchette de commande 6.

Lorsque la butée de blocage 70 est dans sa position escamotée, la course en rotation de la gâchette de commande 6 est maximale et la gâchette de commande 6 est arrêtée par la coque 2 avant d'atteindre la butée de blocage 70 en position escamotée.

Par exemple, et de manière non limitative de l'invention, l'angle de rotation de la gâchette de commande 6 correspondant à la position en butée de la gâchette de commande 6 contre la butée de blocage 70 dans sa position de blocage est égal à 50% de l'angle de rotation complet de la gâchette de commande 6 correspondant à l'enfoncement maximum de la gâchette de commande 6 en butée contre la coque 2.

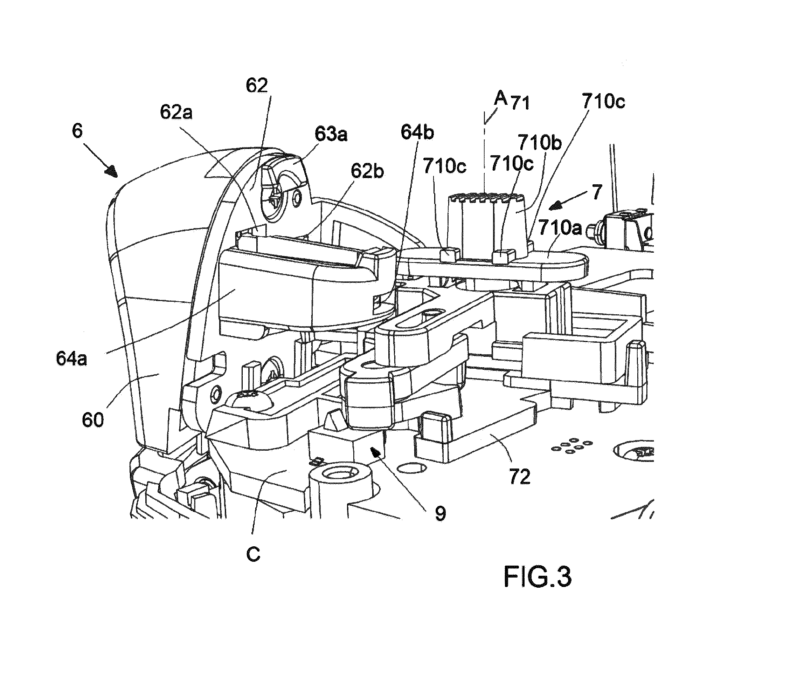

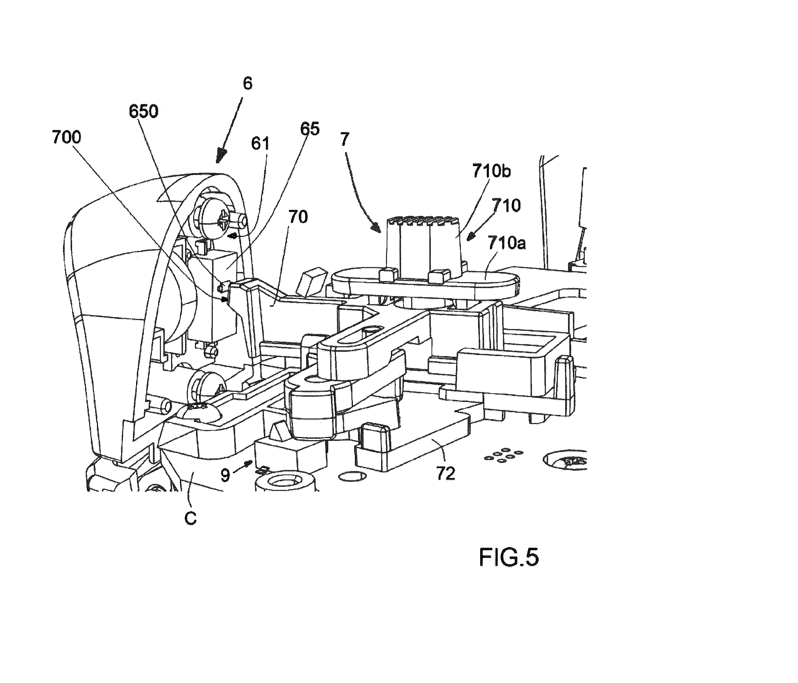

Plus particulièrement, chaque gâchette de commande 6 comporte un corps de gâchette 60 creux comportant une cavité 61 ouverte (Fig.5), qui est fermée par un couvercle de fermeture 62 (Fig.3), sous la forme par exemple d'une plaque.

Ce couvercle de fermeture 62 est fixé de manière amovible au corps de gâchette 60, par exemple en étant vissé au corps creux 60, et peut être facilement retiré pour permettre un accès à la cavité 61 du corps de gâchette 60.

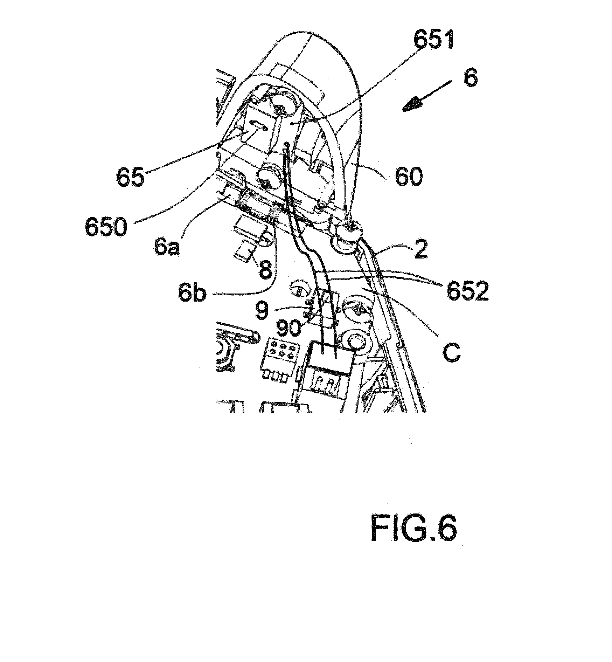

Chaque gâchette de commande 6 comporte un axe de rotation 6a (Figs.6 ,12 et 13) permettant de monter le corps de gâchette 60 de manière rotative par rapport à la coque 2 de la manette et un ressort de rappel 6b (Fig.6) monté sur l'axe de rotation 6a et permettant de rappeler élastiquement la gâchette en position de repos.

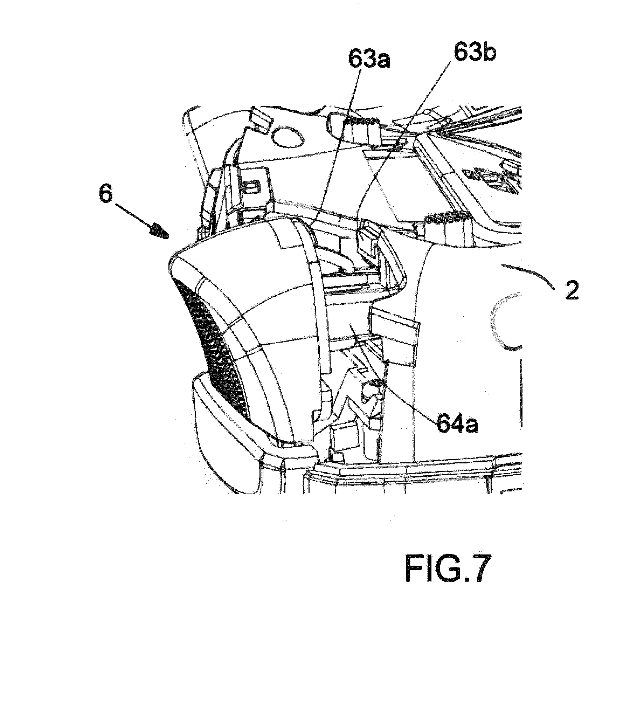

En référence aux figures 3 et 7, chaque gâchette de commande 6 comporte une butée 63a qui est fixée ou intégrée à la plaque de fermeture 62 et qui est prévue pour venir en contact d'une butée 63b (Fig.7) fixée à la coque 2 de la manette, de manière à bloquer en rotation la gâchette de commande 6, lorsque celle-ci est enfoncée au maximum de sa course en rotation, la butée de blocage 70 susvisée étant en position escamotée.

La butée 63b comporte de préférence un matériau de protection pouvant notamment être remplacé, tel que par exemple un tampon en mousse déformable, et permettant d'une manière générale de réduire l'usure de la butée 63b et de la gâchette 6, et plus particulièrement d'amortir les chocs entre la butée 63b et la gâchette de commande 6.

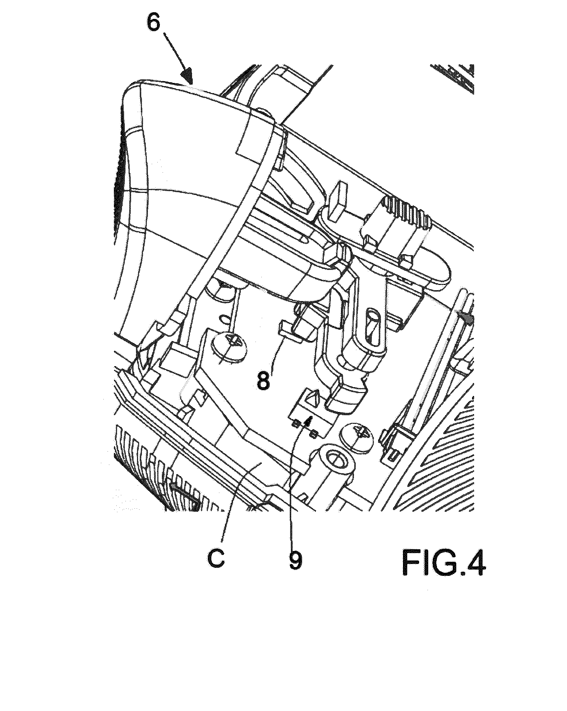

La manette comporte (Fig.3 et Fig.4) un circuit imprimé principal C, de type PCB, qui est logé et fixé à l'intérieur de la coque 2.

La manette comporte également une unité de commande électronique, qui comporte un processeur et qui est soudée sur ce circuit imprimé C. Cette unité de commande est configurée pour générer sur un port de sortie de la manette, un signal électrique de commande à destination de la console de jeux ou équivalent.

En référence à la figure 3, chaque gâchette de commande 6 comporte une pièce creuse 64a en forme de bras, qui est fixée en porte-à - faux à l'intérieur du corps de gâchette 60 et qui passe à travers une ouverture 62a réalisée dans le couvercle de fermeture 62, de manière à être en saillie sous la gâchette de commande 6. Cette pièce 64a contient un aimant 64b, qui est détectable (Fig.4) par un capteur sans contact 8 de type capteur à effet Hall. Ce capteur 8 est soudé sur le circuit imprimé principal C.

Plus particulièrement, mais non nécessairement, lorsque la butée de blocage 70 est en position escamotée, le bras 64a peut avantageusement être utilisé, en plus des butées 63a et 63b, pour bloquer en fin de course la gâchette de commande 6 en butée contre la coque 2, de manière à obtenir une meilleure stabilité de la gâchette de commande 6.

Le capteur sans contact 8 permet de générer un premier signal électrique de détection, qui est par exemple analogique et qui permet de coder l'angle de rotation de la gâchette de commande 6 sur toute sa course en rotation. Ce signal de détection est traité par l'unité de commande électronique susvisée. En variante, ce signal électrique de détection de la position de la gâchette de commande 6 généré au moyen du capteur sans contact 8 peut être numérique et coder numériquement l'angle de rotation instantané de la gâchette de commande 6.

En référence à la figure 5, la gâchette de commande 6 comporte un capteur de fin de course 65, qui est fixé ou intégré au corps de gâchette 60.

Ce capteur 65 est adapté pour détecter une mise en butée de la gâchette de commande 6 contre la butée de blocage 70 positionnée dans ladite position de blocage.

Ce capteur 65 ne peut pas être amené au contact de la butée de blocage 70 lorsque la butée de blocage 70 est dans sa position escamotée, et par conséquent n'est pas activable par la butée de blocage 70 lorsque la butée de blocage 70 est dans sa position escamotée.

Ce capteur de fin de course 65 est positionné au moins en partie à l'intérieur du corps de gâchette 60, et de préférence, tel qu'illustré sur la figure 5, est positionné entièrement à l'intérieur du corps de gâchette 60.

De préférence le capteur de fin de course 65 est un capteur de contact, qui permet de détecter un contact entre le capteur et la face de contact 700 de la butée de blocage 70 en position de blocage (Fig.12) lorsque la gâchette de commande 6 est amenée en butée contre la butée de blocage 70.

Plus particulièrement, mais de manière non limitative de l'invention, dans la variante de réalisation illustrée sur les figures, lorsque la gâchette de commande 6 est amenée en butée contre la butée de blocage 70, la butée de blocage 70 (face de contact 700) est en contact uniquement avec le capteur de fin de course 65 de la gâchette de commande 6.

Plus particulièrement, tel qu'illustré sur la figure 5, le capteur de fin de course 65 est de préférence positionné entièrement à l'intérieur du corps de gâchette 60 et n'est donc pas en saillie à l'extérieur du corps de gâchette 60 par rapport au couvercle de fermeture 62 (Fig.3).

Le couvercle de fermeture 62 comporte une ouverture traversante 62b (Fig.3) permettant un contact entre le capteur de fin de course 65 et la face de contact 700 de la butée de blocage 70, positionnée dans ladite position de blocage.

Plus particulièrement, le capteur de fin de course 65 est positionné en vis à vis de l'ouverture 62b dans le couvercle de fermeture 62. La butée de blocage 70 est positionnée par rapport à cette ouverture 62b, de manière à pouvoir passer à travers cette ouverture traversante 62b du couvercle de fermeture 62 et être au contact du capteur de fin de course 65, lorsque la butée de blocage 70 est position de blocage et que la gâchette de commande 6 est amenée en butée contre la butée de blocage 70 (Fig.12).

La technologie utilisée pour le capteur de fin de course, et notamment la technologie utilisée pour détecter un contact entre la face de contact 700 (Fig.5) de la butée de blocage 70 et le capteur de fin de course 65 lorsque celui-ci est un capteur de contact, n'est pas limitative de l'invention.

De manière non limitative et non exhaustive, le capteur de contact 65 peut être un capteur de contact mécanique, et par exemple un microrupteur comportant un interrupteur mécanique 650 ou commutateur mécanique 650 (Fig.5), qui est activé par une pression au contact de la face de contact 700 de la butée de blocage 70 lorsque la gâchette de commande 6 est enfoncée en butée contre la butée de blocage 70 dans sa position de blocage.

Le capteur de fin de course 65 peut également être un capteur de contact optomécanique, c'est-à-dire un capteur de contact comportant une partie mécanique mobile et/ou déformable qui peut être déplacée et/ou déformée par la butée de blocage 70, et qui est associée à des moyens optiques de détection de ce déplacement et/ou de cette déformation.

Le capteur de fin de course 65 peut également être un capteur de contact piézoélectrique.

Le capteur de fin de course n'est pas nécessairement un capteur de contact, mais peut également être un capteur de proximité apte à réaliser une détection sans contact de la butée de blocage, et notamment un capteur de proximité capacitif, magnétique, inductif ou optique.

En référence à la figure 6, le capteur de fin de course 65 comporte un circuit imprimé secondaire 651 qui est logé et fixé à l'intérieur du corps de gâchette 60 et qui est connecté électriquement au circuit imprimé C principal par deux câbles électriques 652.

Quelle que soit la technologie utilisée, le capteur de fin de course 65 est de préférence un capteur tout ou rien et permet de générer un deuxième signal électrique de détection à deux états, selon que le capteur de fin de course 65 détecte ou non la butée de blocage 70, et plus particulièrement selon que le capteur 65 détecte ou non un contact avec la butée de blocage 70 lorsque le capteur de fin de course 65 est un capteur de contact. Ce deuxième signal de détection est traité par l'unité de commande électronique de la manette.

Le capteur de fin de course 65 est plus facilement accessible lorsqu'il doit être réparé ou remplacé par un nouveau capteur en cas par exemple de dysfonctionnement, comparativement notamment aux solutions techniques décrites dans les demandes de brevet internationale WO 2022/148976 et WO 2023/214929.

Le positionnement du capteur de fin de course 65 permet avantageusement une plus grande réactivité et une plus grande précision dans l'activation du capteur et une meilleure robustesse mécanique, comparativement notamment à la solution technique décrite dans la demande de brevet internationale WO2023/214929.

La structure de la gâchette de commande 6 reste simple, du fait de l'absence de partie mobile sur la gâchette 6, comparativement notamment à la solution technique décrite dans la demande de brevet internationale WO 2022/148976.

Une fois que le capteur de fin de course 65 est déconnecté électriquement du circuit imprimé principal C, la gâchette de commande 6 avec le capteur de fin de course 65 peut également être facilement remplacée par une nouvelle gâchette de commande 6.

Lorsque le capteur 65 peut être retiré du corps de gâchette 6, il peut être également être facilement remplacé par un nouveau capteur de fin de course.

Le capteur de fin de course 65 peut avantageusement être un composant rapporté que l'on trouve dans le commerce.

Pour configurer la manette dans un mode de fonctionnent communément désigné « *Hair Trigger* », l'utilisateur de la manette déplace la butée de blocage 70 dans sa position de blocage, ce qui permet de raccourcir la course de la gâchette de commande 6. Dans ce mode de fonctionnement, l'unité de commande de la manette délivre sur un port de sortie de la manette, à destination d'une console de jeu ou d'un ordinateur connecté à ce port de sortie, un signal de commande à deux états, qui est obtenu à partir du deuxième signal de détection généré au moyen du capteur 65, et qui peut plus particulièrement être directement le deuxième signal de détection généré au moyen du capteur 65. Ce mode de fonctionnement permet une grande réactivité de la commande.

Lorsque la butée de blocage 70 est amenée en position escamotée, la course de la gâchette de commande 6 n'est pas réduite par la butée de blocage 70, mais est au contraire maximale. Dans ce mode de fonctionnement (course maximale de la gâchette), l'unité de commande de la manette délivre sur le port de sortie susvisé de la manette, à destination d'une console de jeu ou d'un ordinateur connecté à ce port de sortie, un signal de commande qui peut être analogique ou numérique, et qui code l'angle de rotation instantanée de la gâchette de commande 6. Ce signal de commande est obtenu après traitement du premier signal électrique de détection généré par le capteur sans contact 8, et peut plus particulièrement être directement ledit signal électrique de détection généré par le capteur sans contact 8.

Dans une variante préférée de réalisation, la manette 1 comporte également un troisième capteur 9, qui est soudé sur le circuit imprimé principal C.

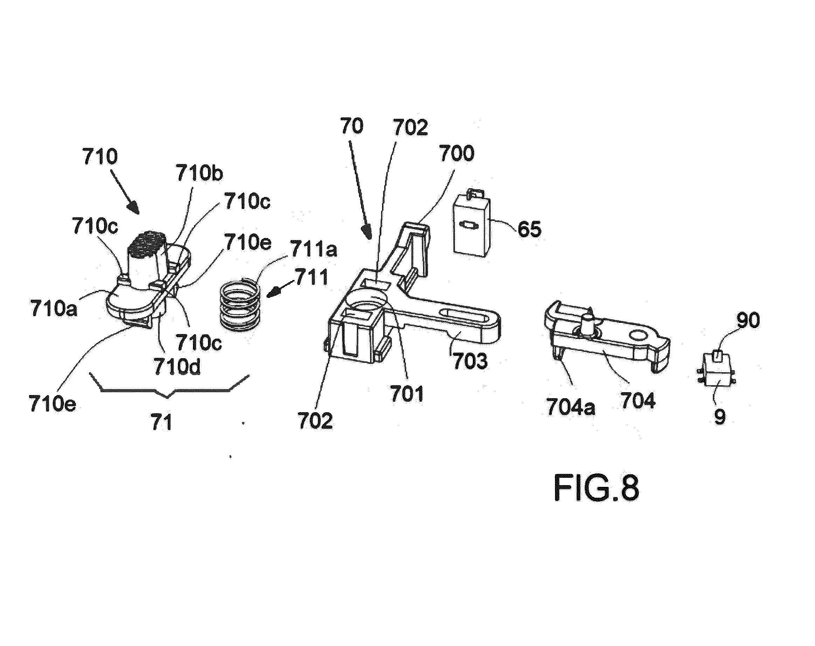

En référence aux figures 8, 9, 14 et 15, la butée de blocage 70 comporte un bras 703 qui est couplé à une pièce d'actionnement 704 montée rotative (Fig.14 - Axe de rotation A₇₀₄) sur le support 72, et qui permet d'entraîner en rotation cette pièce d'actionnement 704 dans un sens ou dans l'autre, lorsque la butée de blocage 70 est déplacée en translation (axe A₇₀) entre sa position de blocage (Fig.12 et Fig.14) et sa position escamotée (Fig.13 et Fig.15)

Cette pièce d'actionnement 704 rotative comporte un doigt 704a qui est positionné de manière à être détecté par le capteur 9.

Plus particulièrement, le capteur 9 peut comporter un interrupteur mécanique 90 ou commutateur mécanique 90, qui est commuté par le mécanisme de réglage 7 lorsque la butée de blocage 70 change de position, et en particulier qui est commuté par le doigt 704 de la pièce d'actionnement 704 rotative. En particulier, dans cet exemple l'interrupteur mécanique 90 commute dans une première position, lorsque la butée de blocage 70 est déplacée depuis sa position escamotée (Fig.15) jusque dans sa position de blocage (Fig.14) et inversement commute dans une deuxième position lorsque la butée de blocage 70 est déplacée depuis sa position de blocage (Fig.14) jusque dans sa position escamotée (Fig.15).

Le capteur 9 n'est pas nécessairement un capteur mécanique, mais peut également être un capteur sans contact, tel que par exemple et de manière non exhaustive un capteur optique ou un capteur inductif qui est activé par exemple par le doigt 704a du mécanisme de régalage 7.

Le capteur 9 peut également être remplacé par un capteur de fin course détectant la butée de blocage 70 en position de de blocage et/ou par un capteur de fin course détectant la butée de blocage 70 en position escamotée.

Ce capteur 9 permet de générer un troisième signal électrique de détection à au moins deux états, un des états correspondant à la position escamotée de la butée de blocage 70 et l'autre état correspondant à la position de bocage de la butée de blocage 70.

Ce troisième signal électrique de détection est traité par l'unité de commande de la manette et permet d'informer l'unité de commande de la manette de la position de la butée de blocage 70 (position escamotée ou position de blocage).

L'unité de commande de la manette est configurée pour sélectionner automatiquement, en fonction de ce troisième signal électrique de détection de position, le signal de détection approprié correspondant à la position de la butée de blocage 70, entre le premier signal de détection produit par le capteur sans contact 8 (position escamotée de la butée de blocage) et le deuxième signal de détection produit par le capteur de contact 65 (position de blocage de la butée de blocage), et pour générer sur le port de sortie de la manette, à destination d'une console de jeu ou d'un ordinateur connecté à ce port de sortie, un signal de commande qui est obtenu à partir du premier ou deuxième signal de détection qui a été sélectionné.

Les figures 3, 8, 9, 10 et 11, 12,13,14 et 15 annexées montrent un mécanisme de réglage 7 particulier qui va à présent être décrit, étant toutefois précisé que l'invention n'est pas limitée à ce mécanisme de réglage particulier.

En référence à la figure 8, le mécanisme de réglage 7 comporte en plus de la butée de blocage 70 susvisée, un mécanisme de verrouillage/déverrouillage 71.

La butée de blocage 70 est montée coulissante en translation rectiligne sur un support 72 (Fig.3 et Fig.5), qui est posé sur et fixé au circuit imprimé principal C à l'intérieur de la coque 2 de la manette et est guidée en translation rectiligne dans la direction de l'axe de translation A₇₀ (Fig.12 à Fig.15), dans un sens ou dans l'autre, entre la position de blocage et la position escamotée qui ont été précédemment décrites.

Plus particulièrement, l'axe de translation A₇₀ de la butée de blocage 70 est transversal, et en l'espèce de préférence perpendiculaire, à l'axe de rotation 6a de la gâchette de commande 6.

Cet axe de translation A₇₀ est ainsi sensiblement parallèle à la direction de la poussée exercée sur la butée de blocage 70 par la gâchette de commande 6 lorsqu'un utilisateur exerce sur la gâchette de commande 6 une pression l'amenant au contact de la butée de blocage 70.

Dans une autre variante de réalisation, l'axe de translation A₇₀ peut avoir une orientation différente, et peut par exemple être parallèle à l'axe de rotation de la gâchette de commande 6.

Dans une autre variante, la translation de la butée de blocage 70 peut ne pas être rectiligne. En outre, le déplacement de la butée de blocage 70 n'est pas nécessairement une translation, mais pourrait par exemple être une rotation.

Le mécanisme de verrouillage/déverrouillage 71 permet à un utilisateur de verrouiller manuellement la butée de blocage 70 dans chacune des deux positions de la butée de blocage susvisées (position de blocage et position escamotée). Il permet également à un utilisateur de déverrouiller manuellement la butée de blocage 70 dans chacune des deux positions susvisées (position de blocage et position escamotée) et d'entraîner manuellement la butée de blocage 70, lorsque celle-ci est déverrouillée, dans la position souhaitée.

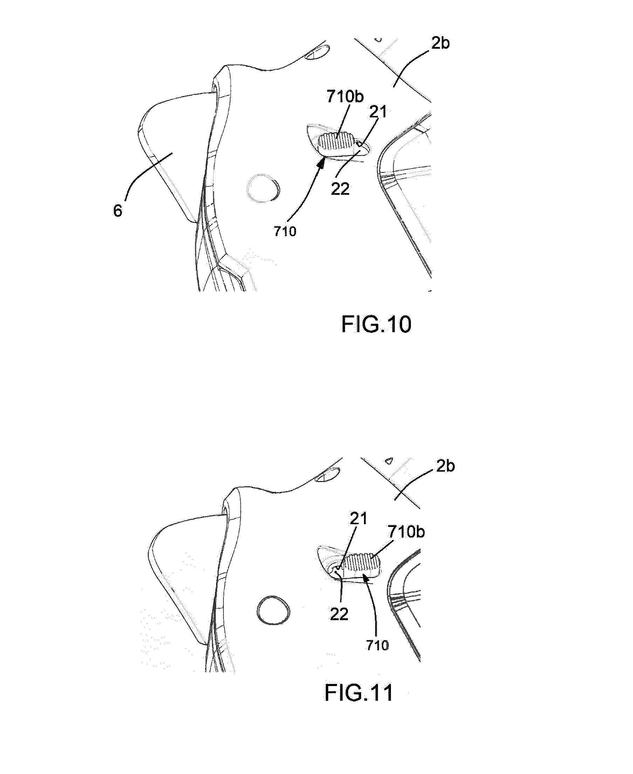

Dans la variante particulière de réalisation illustrée sur les figures, le mécanisme de verrouillage/déverrouillage 71 comprend l'élément d'actionnement 710 précédemment décrit, qui est monté sur la butée de blocage 70 et est mobile par rapport à la butée de blocage 70 entre :
- au moins une configuration verrouillée, dans laquelle l'élément d'actionnement 710 coopère avec la coque 2 de manière à pouvoir bloquer la butée de blocage 70 par rapport à la coque 2 de la manette 1, dans chacune des positions de la butée 70 [Figure 10- verrouillage de la butée de blocage dans la position de blocage / Figure 11 - verrouillage de la butée de blocage dans la position escamotée]
- et au moins une configuration déverrouillée, dans laquelle l'élément d'actionnement 710 est apte à être déplacé et à entraîner en translation rectiligne la butée de blocage 70 dans chacune desdites positions de réglage (c.-à-d. position de blocage et position escamotée).

Plus particulièrement, dans cette variante particulière de réalisation l'élément d'actionnement 710 est mobile en translation rectiligne par rapport à la butée de blocage 70, entre ladite configuration verrouillée et ladite configuration déverrouillée, le long d'un axe de translation A₇₁ (Fig.12) qui est transversal, et de préférence perpendiculaire, à l'axe de translation A₇₀ de la butée de blocage.

Plus particulièrement, dans l'exemple illustré, mais de manière non limitative de l'invention, l'axe de translation A₇₁ est également transversal, et en l'espèce perpendiculaire à l'axe de rotation de la gâchette de commande 6. Dans une autre variante, il peut avoir une orientation différente et par exemple peut être parallèle à l'axe de rotation de la gâchette de commande 6.

L'élément d'actionnement 710 est une pièce par exemple en plastique. Dans une autre variante, il peut être constitué par un assemblage de plusieurs pièces.

Plus particulièrement, l'élément d'actionnement 710 est monté sur la butée de blocage 70 en étant de préférence aligné (Figure 12) avec l'axe de translation A₇₀ de ladite butée de blocage 70, ce qui permet d'obtenir une construction plus compacte et plus robuste.

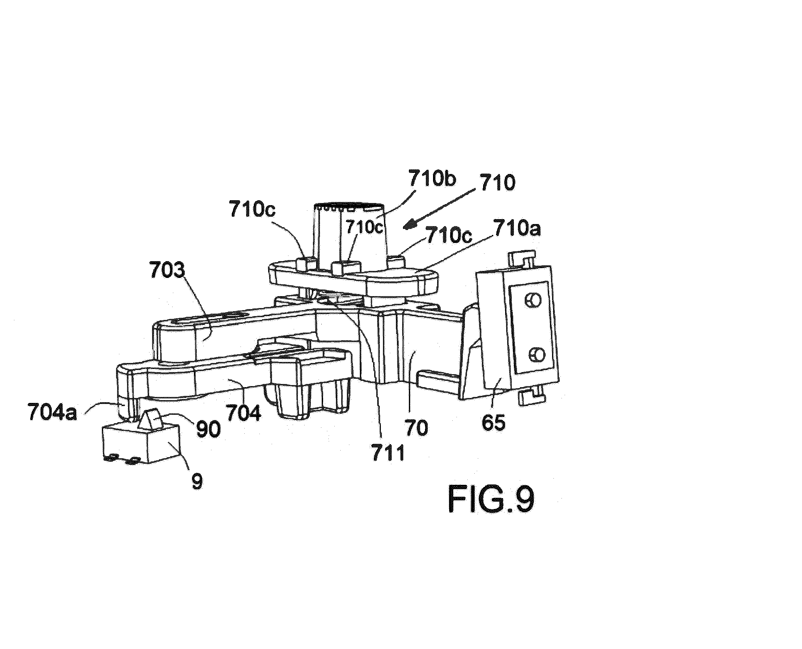

Le mécanisme de verrouillage/déverrouillage 71 comprend également (Fig.8 et Fig.9) un élément de rappel élastique 711, qui permet d'une manière générale de rappeler élastiquement l'élément d'actionnement 710 dans sa configuration verrouillée.

Lorsqu'il est assemblé avec la butée de blocage 70, l'élément d'actionnement 710 est apte à être amené et maintenu en configuration déverrouillée par une pression manuelle, de manière à enfoncer l'élément d'actionnement 710 et contraindre, et dans ce cas particulier comprimer, l'élément de rappel élastique 711.

En l'absence de pression manuelle sur l'élément d'actionnement 710, l'élément de rappel élastique 711 permet de rappeler élastiquement ledit élément d'actionnement 710 dans sa configuration verrouillée, ce qui permet d'éviter une manipulation supplémentaire à l'utilisateur, puisqu'il lui suffit de relâcher la pression sur l'élément d'actionnement 710 pour que celui-ci revienne automatiquement dans sa configuration verrouillée.

Cet élément de rappel élastique 711 facilite également le réglage indexé du positionnement de la butée mobile 70 et permet à un utilisateur d'effectuer plus facilement à l'aveugle le réglage de la course d'une gâchette de commande 6 sans regarder le bouton d'actionnement 710b.

De préférence l'élément de rappel élastique 711 est précontraint de manière à exercer sur l'élément d'actionnement 710 une force de rappel le maintenant en configuration verrouillée, en l'absence de pression manuelle exercée sur cet élément d'actionnement 710, ce qui permet avantageusement de renforcer le verrouillage et d'encore mieux réduire les risques de déverrouillage accidentel.

Dans cette variante particulière de réalisation, et de manière non limitative de l'invention, l'élément de rappel élastique 711 comporte un ressort hélicoïdal 711a.

L'invention n'est pas limitée à la mise en oeuvre d'un ressort hélicoïdal, mais ledit ressort hélicoïdal peut être remplacé par tout moyen de rappel élastique équivalent permettant, en l'absence de pression manuelle sur l'élément d'actionnement 710, de rappeler élastiquement ledit élément d'actionnement 710 dans sa configuration verrouillée.

Par exemple dans une autre variante de réalisation, l'élément de rappel élastique 711 peut comporter un ressort de type lame élastiquement déformable.

Par ailleurs, dans l'exemple particulier illustré, l'élément de rappel élastique 711 (ressort 711a) est conçu pour travailler en compression. Dans une autre variante, l'élément de rappel élastique 711 peut être conçu pour travailler en traction.

Plus particulièrement, dans cette variante particulière de réalisation, l'élément d'actionnement 710 comporte (Fig.8) une embase 710a dont la face supérieure est surmontée d'un bouton d'actionnement 710b. Ce bouton d'actionnement 710b est prévu pour être positionné au moins en partie à l'extérieur de la coque 2 (Figures 10 et 11) de manière à pouvoir être manipulé par l'utilisateur de la manette 1.

L'élément d'actionnement 710 comporte également, de part et d'autre du bouton d'actionnement 71 0b, des éléments de verrouillage 710c, de type mâle, qui sont en saillie par rapport à la face supérieure de l'embase 710a. Ces éléments de verrouillage 710c, de type mâle, sont destinés à venir s'emboîter dans des logements de verrouillage 21 complémentaires (Figures 10 et 11) prévus dans la demi-coque 2b pour verrouiller l'élément d'actionnement 710 par rapport à la coque 2 (configuration verrouillée du mécanisme 71) de manière indexée dans chacune des positions de réglage (position escamotée et position de blocage) de la butée de blocage 70.

Dans une autre variante de réalisation, les éléments de verrouillage 710c de l'élément d'actionnement 710 peuvent être de type femelle et les logements de verrouillage 21 dans la coque 2 peuvent être remplacés par des éléments de verrouillage de type mâle complémentaires des éléments de verrouillage de type femelle de l'élément d'actionnement 710.

Pour son montage sur la butée de blocage 70, l'élément d'actionnement 710 comporte également, sous cette embase 710a, un cylindre de guidage 710d central (Fig.8) sur lequel peut être enfilé le ressort 711a et comporte deux ergots élastiques 710e positionnés de part et d'autre du cylindre de guidage 710d.

Dans cette variante particulière, la butée de blocage 70 comporte un logement cylindrique 701 (Fig.8), qui débouche dans la face supérieure de la butée de blocage 70 et qui est adaptée pour recevoir le cylindre de guidage 710d de l'élément d'actionnement 710 et le ressort 711a enfilé sur ce cylindre de guidage 710d.

La butée de blocage 70 comporte également deux ouvertures traversantes 702 (Fig.8), positionnées de part et d'autre du logement cylindrique 701, et à travers lesquelles les ergots de verrouillage élastiques 710c peuvent être insérés de manière à solidariser l'élément d'actionnement 710 avec la butée de blocage 70.

Lorsque l'élément d'actionnement 710, l'élément de rappel élastique 711 (ressort 711a) et la butée de blocage 70 sont assemblés et que les deux demi-coques 2a, 2b sont assemblées, le bouton d'actionnement 710b de l'élément d'actionnement 710 est en saillie à l'extérieur de la coque 2 en étant positionné à travers une ouverture traversante 22 oblongue (Figures 10 et 11) dans la demi-coque 2b, et est ainsi accessible et peut être facilement manipulé par un utilisateur de la manette 1.

En l'absence de pression exercée par l'utilisateur sur le bouton d'actionnement 71 0b, les éléments de verrouillage 710c, de type mâle, de l'élément d'actionnement 710 sont emboîtés dans les logements de verrouillage 21 prévus dans la coque 2, de sorte que la butée de blocage 70 est verrouillée en position (configuration verrouillée) par rapport à la coque 2 de la manette dans l'une des positions de réglage susvisées (position de blocage ou position escamotée).

De préférence, en configuration verrouillée, le ressort de rappel 711a est précontraint, en étant dans cet exemple particulier légèrement comprimé, de manière à exercer sur l'élément d'actionnement 710 une pression permettant de maintenir les éléments de verrouillage 710c de type mâle dans les logements de verrouillage 21, et ainsi de maintenir le verrouillage en évitant un déverrouillage involontaire lors de la manipulation de la manette 1.

Pour amener la butée de blocage dans une autre position de réglage (position de blocage ou position escamotée), il suffit dans un premier temps à l'utilisateur de la manette de déverrouiller la butée de blocage 70 pour l'amener en configuration déverrouillée, en exerçant sur le bouton d'actionnement 710b de l'élément d'actionnement 710 une pression suffisante pour comprimer l'élément de rappel élastique 711 (ressort 711a) et enfoncer suffisamment l'élément d'actionnement 710 de manière à dégager complètement les éléments de verrouillage 710c, de type mâle des logements de verrouillage 21 de la coque 2.

Ensuite dans un deuxième temps, en maintenant l'élément d'actionnement 710 enfoncé, l'utilisateur déplace en translation l'élément d'actionnement 710 qui est solidaire de la butée de blocage 70, de manière à entraîner en translation rectiligne la butée de blocage 70 dans la direction de l'axe de translation A₇₀, jusqu'à ladite position de réglage souhaitée.

Lors de ce déplacement en translation, la butée de blocage 70 coulisse par rapport au support 72 en étant maintenue et guidée en translation sur ledit support 72.

Dans un troisième temps, lorsque la butée de blocage 70 est dans la position de réglage souhaitée, l'utilisateur relâche la pression sur l'élément d'actionnement 710, lequel est repoussé par l'élément de rappel élastique 711 (ressort 711a) de sorte que les éléments de verrouillage 710c de l'élément d'actionnement 710 se positionnent dans les logements de verrouillage 21 dans la coque 2, la butée de blocage 70 étant ainsi verrouillée de manière robuste et stable dans cette position de réglage.

L'élément d'actionnement 710 n'est pas nécessairement monté sur la butée de blocage 70 en étant aligné avec l'axe de translation A₇₀ de ladite butée de blocage 70. Dans une autre variante de réalisation, l'élément d'actionnement 710 peut être relié mécaniquement à la butée de blocage 7, en étant déporté par rapport à l'axe de translation A₇₀ de ladite butée de blocage.

L'élément de rappel élastique 711 n'est pas nécessairement monté et embarqué sur la butée de blocage 70. Dans une autre variante, l'élément de rappel élastique peut être fixé à l'intérieur du corps 2 de la manette 1, la butée de blocage 70 et l'élément d'actionnement étant mobiles par rapport à l'élément de rappel élastique pour le positionnement de la butée de blocage dans chaque position de réglage.

Dans une autre variante, l'élément d'actionnement 710 et la butée de blocage 70 peuvent être liés rigidement entre eux, l'élément d'actionnement 710 étant fixe par rapport à la butée de blocage 70.

L'invention n'est pas limitée à la variante particulière de réalisation illustrée sur les figures annexée et s'étend également et de manière non exhaustive aux variantes ci-après.

Le dispositif d'entrée de commande de l'invention ne se limite pas à une butée de blocage ayant uniquement deux positions de réglage (position de blocage et position escamotée), mais la butée de blocage peut être adaptée pour avoir trois positions de réglage différentes ou plus définissant chacune une course différente pour le mouvement de la gâchette de commande.

Dans le cadre de l'invention, la butée de blocage 70 n'est pas nécessairement mobile en translation par rapport à la coque 2, mais peut dans une autre variante être mobile en rotation par rapport à la coque 2 pour son positionnement dans chaque position de réglage (position escamotée et position de blocage).

Bien que le mouvement en rotation pour la gâchette de commande 6 soit le plus simple à mettre en oeuvre et le plus fréquemment mis en oeuvre pour un contrôleur de jeu ou une manette de jeu, dans le cadre de l'invention la gâchette de commande n'est pas nécessaire rotative, l'invention pouvant s'appliquer plus généralement à d'autres types de mouvement d'une gâchette de commande. Par exemple, la gâchette de commande peut être conçue pour être actionnée manuellement en étant déplacée et guidée en translation, notamment de manière à être plus ou moins enfoncée dans la coque 2.

## Revendications

1. Dispositif d'entrée de commande, notamment contrôleur de jeu ou manette de jeu (1), comportant au moins une gâchette de commande (6) qui est mobile et actionnable par un utilisateur, et qui est de préférence rotative, et un mécanisme de réglage (7) de la course de ladite gâchette de commande (6), dans lequel le mécanisme de réglage (7) comporte une butée de blocage (70) adaptée pour pouvoir être positionnée dans au moins une position de blocage dans laquelle elle bloque la gâchette de commande (6) amenée en butée contre la butée de blocage (70), de manière à réduire la course de la gâchette de commande (6), et dans lequel la gâchette de commande (6) comprend un capteur de fin de course (65), qui est adapté pour détecter la position de la gâchette de commande (6) en butée contre la butée de blocage (70) positionnée dans ladite position de blocage.

2. Dispositif selon la revendication 1, dans laquelle la gâchette de commande (6) comporte un corps de gâchette (60) creux dans lequel le capteur de fin de course (65) est positionné, de préférence entièrement.

3. Dispositif selon la revendication 2, dans lequel la gâchette de commande (6) comporte un couvercle de fermeture (62) qui ferme le corps de gâchette (60), qui est amovible de manière à pourvoir être retiré et qui comporte une ouverture traversante (62b) permettant au capteur de fin de course (65) de détecter la position de la gâchette de commande (6) en butée contre la butée de blocage (70) positionnée dans ladite position de blocage, et de préférence permettant un contact entre le capteur de fin de course (65) et la butée de blocage (70).

4. Dispositif selon la revendication 3, dans lequel le capteur de fin de course est positionné entièrement à l'intérieur du corps de gâchette et dans lequel la butée de blocage passe à travers l'ouverture traversante (62b) du couvercle de fermeture (62) de la gâchette de commande (6) lorsque la butée de blocage (70) est en position de blocage et que la gâchette de commande (6) est mise en butée contre la butée de blocage.

5. Dispositif selon l'une quelconque des revendications 1 à 4, dans lequel la butée de blocage (70) est adaptée pour pouvoir être positionnée dans une position escamotée dans laquelle la butée de blocage (70) ne fait pas obstacle à la gâchette de commande (6) et la course de la gâchette de commande (6) est supérieure à celle obtenue avec ladite position de blocage, et de préférence dans lequel le capteur de fin de course (65) n'est pas activable ou n'est pas fonctionnel lorsque la butée de blocage est dans ladite position escamotée

6. Dispositif selon l'une quelconque des revendications 1 à 5, comportant un capteur de position sans contact (8), de préférence un capteur magnétique, et plus préférentiellement encore un capteur à effet Hall, qui est adapté pour détecter la position de la gâchette de commande (6), et plus particulièrement pour mesurer l'angle de rotation de la gâchette de commande (6) lorsque celle-ci est rotative.

7. Dispositif selon l'une quelconque des revendications 1 à 6, comportant une unité de commande électronique, qui est configurée pour sélectionner un premier signal électrique de détection généré au moyen du capteur de fin de course (65) lorsque la butée de blocage (70) est dans sa position de blocage, et pour sélectionner un deuxième signal électrique de détection généré au moyen du capteur de position sans contact (8), lorsque la butée de blocage (70) n'est pas dans sa position de blocage, et dans lequel l'unité de commande électronique est configurée pour générer un signal de commande obtenu à partir du signal électrique de détection qui est sélectionné.

8. Dispositif selon la revendication 7, comportant un troisième capteur (9) qui est positionné par rapport au mécanisme de réglage (7) de la course de gâchette de commande, de manière à être activé par ledit mécanisme de réglage (7) lorsque la butée de blocage (70) est dans sa position de blocage et/ou lorsque la butée de blocage (70) est dans sa position escamotée, et de préférence dans lequel l'unité de commande électronique est configurée pour sélectionner le signal électrique détection parmi le premier signal électrique de détection et le deuxième signal électrique de détection, en fonction d'un signal électrique de détection généré par le troisième capteur (9).

9. Dispositif selon l'une quelconque des revendications 1 à 8, dans lequel le mécanisme de réglage (7) de la course de gâchette de commande est actionnable manuellement, et de préférence dans lequel le dispositif comporte une coque (2) et le mécanisme de réglage (7) de la course de gâchette de commande comprend un élément d'actionnement (710), dont une partie (710b) au moins est positionnée à l'extérieur de la coque (2), et qui est lié mécaniquement à la butée de blocage (70) et permet à un utilisateur de déplacer la butée de blocage (70) entre ladite la position de blocage et une position de escamotée dans laquelle la butée de blocage ne fait pas obstacle à la gâchette de commande (6) et la course de la gâchette de commande (6) est supérieure à celle obtenue avec ladite position de blocage.

10. Dispositif selon la revendication 9, comportant un mécanisme de verrouillage/déverrouillage (71) qui est adapté pour verrouiller manuellement la butée de blocage (70) au moins dans sa position de blocage et de préférence également dans une position escamotée dans laquelle la butée de blocage ne fait pas obstacle à la gâchette de commande (6) et la course de la gâchette de commande (6) est supérieure à celle obtenue avec ladite position de blocage et qui est adapté pour déverrouiller manuellement la butée de blocage (70) au moins lorsqu'elle est dans sa position de blocage et de préférence également lorsqu'elle est dans sa position escamotée, et de préférence dans lequel ledit mécanisme de verrouillage/déverrouillage comprend ledit élément d'actionnement (710) et ledit élément d'actionnement (710) est mobile entre au moins une configuration déverrouillée dans laquelle l'élément d'actionnement (710) est apte à être déplacé manuellement en entraînant la butée de blocage (70) entre sa position de blocage et sa position escamotée, et au moins une configuration verrouillée dans laquelle l'élément d'actionnement (710) coopère avec une coque (2) du dispositif de manière à bloquer la butée de blocage (70) au moins dans sa position de blocage et de préférence également dans sa position escamotée.

11. Gâchette de commande (6) d'un dispositif d'entrée de commande, notamment d'un contrôleur de jeu ou manette de jeu (1), comportant un capteur de fin de course (65), et de préférence un capteur de fin de course (65) qui est un capteur de contact.

12. Gâchette de commande selon la revendication 11, comportant un corps de gâchette (60) creux dans lequel est positionné, de préférence entièrement, le capteur de fin de course (65).

13. Gâchette de commande selon la revendication 12, comportant un couvercle de fermeture (62) qui ferme le corps de gâchette (60), qui est amovible de manière à pourvoir être retiré et qui comporte une ouverture traversante (62b), et le capteur de fin de course (65) étant positionné entièrement à l'intérieur du corps de gâchette et en vis-à-vis de cette ouverture traversante.

14. Gâchette de commande selon l'une quelconque des revendications 12 ou 13, comportant un aimant (64b).

15. Dispositif selon l'une quelconque des revendications 1 à 10 ou gâchette de commande (6) selon l'une quelconque des revendications 11 à14, le capteur de fin de course (65) étant un capteur de contact et/ou capteur de fin de course (65) étant un capteur tout ou rien et/ou le capteur de fin de course (65) étant choisi parmi la liste suivante : capteur de contact mécanique, capteur de contact optomécanique, capteur de contact comprenant un interrupteur mécanique ou un commutateur mécanique, capteur de contact piézoélectrique.
